# EUROPEAN PATENT SPECIFICATION

(11) **EP 3 651 257 B1**
(45) Date of publication and mention of the grant of the patent: **18.01.2023**
(21) Application number: 18827417.9
(22) Date of filing: 25.06.2018
(51) Int. Cl.: H01M 50/417, H01M 50/46, H01M 10/0525, H01M 4/13, H01M 50/489, H01M 4/02

(54) **LITHIUM ION SECONDARY BATTERY ELEMENT AND LITHIUM ION SECONDARY BATTERY**
LITHIUM-IONEN-SEKUNDÄRBATTERIEELEMENT UND LITHIUM-IONEN-SEKUNDÄRBATTERIE
ÉLÉMENT DE BATTERIE RECHARGEABLE AU LITHIUM-ION ET BATTERIE RECHARGEABLE AU LITHIUM-ION

(30) Priority: 07.07.2017 JP 2017133277
(43) Date of publication of application: 13.05.2020
(73) Proprietor: Envision AESC Japan Ltd., Kanagawa 2520012 (JP)
(72) Inventor: TANAKA, Shin, Zama-shi Kanagawa 252-0012 (JP); OHARA, Kenji, Zama-shi Kanagawa 252-0012 (JP); NAGASHIMA, Satoshi, Zama-shi Kanagawa 252-0012 (JP); IRIYAMA, Jiro, Zama-shi Kanagawa 252-0012 (JP)
(74) Representative: Mathys & Squire
(86) International application number: PCT/JP2018/023990
(87) International publication number: WO 2019/009121

(56) References cited:
- WO-A1-2013/147071
- JP-A- 2010 106 071
- JP-A- 2017 078 153
- US-A1- 2012 141 887

## Description

### TECHNICAL FIELD

The present invention relates to a nonaqueous electrolyte battery, particularly to a lithium ion secondary battery and a lithium ion secondary battery element that forms the lithium ion secondary battery.

### BACKGROUND ART

US 2012/141887 A1 mentioning an improvement of the cycle characteristics of a high-capacity secondary battery containing an active material packed at a high density, by using a particulate active material having a low aspect ratio, describes a nonaqueous-electrolyte secondary battery comprising a negative electrode and a positive electrode each capable of occluding/releasing lithium, a separator, and a nonaqueous electrolyte solution comprising a nonaqueous solvent and a lithium salt, wherein the separator comprises a porous film made of a thermoplastic resin containing an inorganic filler, and at least either of the following is satisfied: the active material contained in the negative electrode is a particulate active material having an aspect ratio of from 1.02 to 3; and the active material contained in the positive electrode is a particulate active material having an aspect ratio of from 1.02 to 2.2.

Nonaqueous electrolyte batteries have been put into practical use as batteries for vehicles including hybrid vehicles, electric vehicles, and the like. Examples of such batteries for on-vehicle power sources include a lithium ion secondary battery. The lithium ion secondary battery has been required to have various characteristics such as an output characteristic, energy density, capacity, lifetime, and high-temperature stability. In particular, in order to improve the stability and the lifetime of the battery, a battery structure including an electrode and an electrolyte solution has been improved variously.

In particular, the lithium ion secondary battery for hybrid vehicles (HEV-battery) is required to have both high output and safety. In addition, such a battery is required to attain the high output state immediately after the battery is operated (discharged) and keep the high output state. That is to say, the HEV-battery achieves the high output because of current flowing after the battery is operated (discharged) but as the voltage decreases, the output decreases. In view of this, it is desirable to keep the output for a long time by keeping the voltage more than or equal to a certain value for a certain period of time. When the members of the battery are devised in order to achieve the high output of the battery, diffusion of lithium ions becomes a rate-determining factor. Thus, there is a limitation in the time for which the voltage of the battery can be kept. It is desirable to extend the time for which the output is kept by keeping the voltage of the battery over such a limitation.

A lithium ion secondary battery with the safety enhanced by preventing the heat generation of the battery has been suggested (Patent Literature 1). JP-A-2017-33826 suggests to keep the output of a battery high without decreasing the safety by considering the balance between the heat generation index of the battery and the heat shrinkage of a separator.

### SUMMARY OF THE INVENTION

### PROBLEMS TO BE SOLVED BY THE INVENTION

In the conventional technique according to JP-A-2017-33826, the heat resistance of an HEV-battery is improved by the use of a ceramic separator mainly. However, because of the presence of the ceramic layer, the separator becomes thicker. Therefore, the distance between a surface of a negative electrode current collector and a positive electrode active material layer may become longer. In this case, there has been room for improvement in extending the time for which the maximum power of the battery is maintained further by causing the battery to keep the voltage that is more than or equal to a certain level.

An object of the present invention is to provide an element for a high-output lithium ion secondary battery that can maintain a voltage, which degreases as current flows after a battery is operated (discharged), to be more than or equal to a certain value for a certain period of time.

### SOLUTION TO THE PROBLEMS

A lithium ion secondary battery element according to an embodiment of the present invention includes a positive electrode, a separator, and a negative electrode that are stacked. The positive electrode includes a positive electrode active material layer formed by applying a positive electrode active material mixture, and the negative electrode includes a negative electrode active material layer formed by applying a negative electrode active material mixture. The separator is a uniaxially stretched film of polyolefin and has an air permeability of less than or equal to 100 seconds/100 milliliters, and after a lithium ion secondary battery including the lithium ion secondary battery element is charged and discharged once, a total of a thickness of the separator and a thickness of the negative electrode active material layer formed on one surface of the negative electrode is less than or equal to 50 micrometers.

### EFFECTS OF THE INVENTION

By the use of a lithium ion secondary battery element according to the present invention, an HEV-battery that can maintain the high output can be provided by considering the balance between the air permeability of the separator and the substantial movement distance of lithium ions.

### BRIEF DESCRIPTION OF THE DRAWINGS

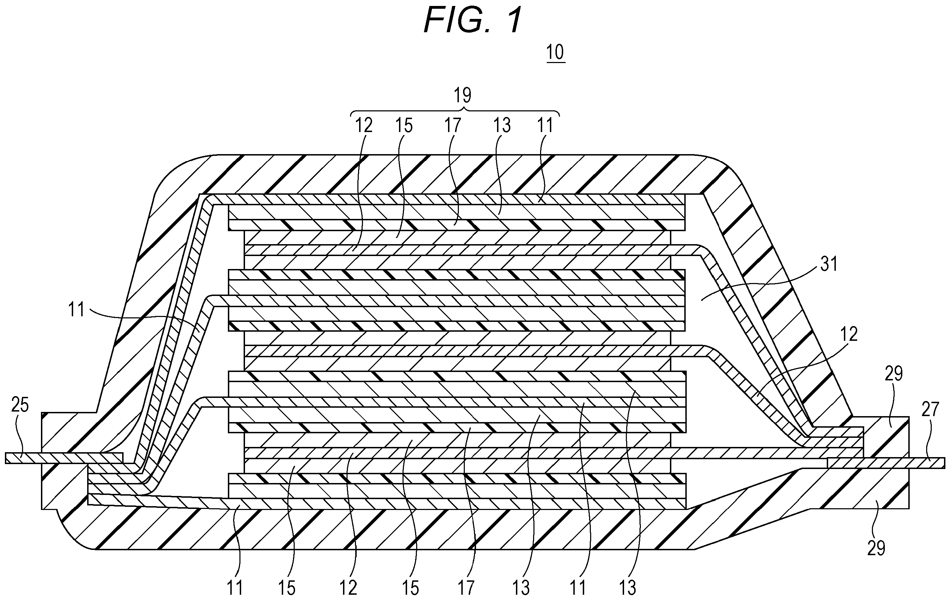

FIG. 1 is a schematic cross-sectional view illustrating a lithium ion secondary battery according to one embodiment of the present invention.

### DESCRIPTION OF THE EMBODIMENTS

An embodiment of the present invention is hereinafter described. A lithium ion secondary battery element according to the embodiment includes a positive electrode, a separator, and a negative electrode that are stacked. The positive electrode includes a positive electrode active material layer formed by applying a positive electrode active material mixture. The negative electrode includes a negative electrode active material layer formed by applying a negative electrode active material mixture. In the embodiment, the positive electrode is a thin-plate or sheet shaped rectangular battery member including a positive electrode active material layer. The positive electrode active material layer is formed by drying a positive electrode current collector such as a metal foil on which a mixture (positive electrode active material mixture) including a positive electrode active material, a binder, and, if necessary, a conductive agent is applied or rolled. The negative electrode is a thin-plate or sheet shaped rectangular battery member including a negative electrode active material layer. The negative electrode active material layer is formed by applying a mixture (negative electrode active material mixture) including a negative electrode active material, a binder, and, if necessary, a conductive agent on a negative electrode current collector. The separator is a film-shaped battery member for separating the positive electrode and the negative electrode in order to secure the conductivity of lithium ions between the negative electrode and the positive electrode. By the positive electrode, the negative electrode, and the separator that are stacked, the lithium ion secondary battery element according to the embodiment is formed.

In the lithium ion secondary battery element according to the embodiment, the separator is a uniaxially stretched film of polyolefin. Polyolefin is a compound obtained by polymerizing or co-polymerizing α-olefin such as ethylene, propylene, butene, pentene, or hexene. Examples thereof include polyethylene, polypropylene, polybutene, polypentene, polyhexene, and a copolymer thereof. The uniaxially stretched film is a film obtained by stretching polyolefin in a longitudinal direction. The uniaxially stretched film has high strength in a stretching direction and high resistance against twisting. The uniaxially stretched film has a heat shrinking property. The uniaxially stretched film preferably has a structure including pores that are closed when the battery temperature is increased. That is to say, the uniaxially stretched film is preferably a porous or microporous polyolefin film. Since the polyolefin film has such a structure, even if the battery temperature should increase, the separator is closed (shutdown) to block the ion flow. That is to say, when the uniaxially stretched polyolefin film is shrunk in the heating of the battery, the pores are closed. Therefore, the short-circuiting between the positive electrode and the negative electrode can be prevented. To achieve the shutdown effect, it is particularly preferable to use the porous polyethylene film.

The separator of the lithium ion secondary battery element according to the present embodiment has an air permeability of less than or equal to 100 seconds/100 milliliters. The air permeability is the time required for the air with a predetermined volume to permeate a unit area under a unit pressure. The air permeability is also referred to as "Gurley permeability" or "impermeability". In the present specification, the term "air permeability" is used. The unit of the air permeability is [seconds/100 milliliters]. That is to say, the air permeability is the value expressing how many seconds it takes for 100 milliliters of air to permeate the unit area. As this value is larger, air permeates less easily. The separator used in the embodiment is a porous film with a particular air permeability. As more lithium ions are discharged per area of the battery, that is, more lithium ions are moved per unit area, the output of the battery is more influenced by the air permeability of the separator. It can be said that as more lithium ions are moved, whether the separator easily passes the lithium ions has an larger influence on the battery output. The lithium ion secondary battery of the high output type needs to keep the predetermined voltage after the short discharging. Therefore, it is necessary to select the appropriate separator so that the separator does not interrupt the movement of the lithium ions. Based on the air permeability of the separator, the preferable separator can be selected.

In the present embodiment, the separator may be a uniaxially stretched film that is crosslinked. As described above, the uniaxially stretched film has a property of shrinking when heated. Therefore, when the battery is overheated, the film is shrunk and the separator is shut down. However, when the film has a large heat shrinkage, the area of the film changes largely. Therefore, on the contrary, a large current may flow. The crosslinked uniaxially stretched film has an appropriate heat shrinkage. Therefore, even if overheated, such a film does not change largely in area, and the film shrinks only by the closed pores.

In the lithium ion secondary battery element according to the embodiment, after the lithium ion secondary battery including the lithium ion secondary battery element is charged and discharged once, the total of the thickness of the separator and the thickness of the negative electrode active material layer formed on one surface of the negative electrode is less than or equal to 50 micrometers. The thickness of the separator is the average thickness of the whole separator. The thickness of the negative electrode active material layer formed on one surface of the negative electrode is the average thickness of the whole negative electrode active material layer formed by, for example, pressing the negative electrode active material mixture applied on one surface of the negative electrode current collector. As the lithium ion secondary battery including the negative electrode including the formed negative electrode active material layer is charged and discharged, the thickness of the negative electrode active material layer changes. In general, the negative electrode active material layer after the charging and discharging has larger thickness than the negative electrode active material layer before the charging and discharging. In the present embodiment, in the word "the total of the thickness of the separator and the thickness of the negative electrode active material layer formed on one surface of the negative electrode", the thickness of the negative electrode active material layer means the thickness of the negative electrode active material layer after the lithium ion secondary battery including the lithium ion secondary battery element according to the present embodiment is charged and discharged once. Here, "after charged and discharged once" means the entire period after the initial charging and discharging of the lithium ion secondary battery. That is to say, "after charged and discharged once" includes not just after the initial charging and discharging but also after the second and subsequent charging and discharging. In the manufacture of the lithium ion secondary battery element, it is preferable to form the negative electrode active material layer by controlling so that the total of the thickness of the negative electrode active material layer (one surface) that is measured after the lithium ion secondary battery including the lithium ion secondary battery element according to the present embodiment is charged and discharged initially, and the thickness of the separator becomes less than or equal to 50 micrometers. The total of the thickness of the separator and the thickness of the negative electrode active material layer formed on one surface of the negative electrode is the maximum movement distance of the lithium ion that has moved from the negative electrode to the surface of the positive electrode on the side in contact with the separator when the battery is discharged. This distance (length) is preferably less than or equal to 50 micrometers. In consideration of the thickness of the separator that is generally used and the substantial thickness of the negative electrode active material layer, the total of the thickness of the separator and the thickness of the negative electrode active material layer formed on one surface of the negative electrode is preferably more than or equal to 10 micrometers and less than or equal to 40 micrometers.

Subsequently, the members of the lithium ion secondary battery element are described in more detail. The positive electrode that can be used in every embodiment includes the positive electrode active material layer formed by applying the positive electrode active material mixture. The positive electrode includes the positive electrode active material layer obtained by drying the mixture of the positive electrode active material, the binder, and in some cases, the conductive agent that are applied or rolled on the positive electrode current collector including a metal foil such as an aluminum foil. Preferably, the positive electrode active material layer is a porous or microporous layer including pores. In each embodiment, the positive electrode active material layer preferably includes lithium nickel composite oxide as the positive electrode active material. The lithium nickel composite oxide is transition metal composite oxide containing lithium and nickel, and is expressed by a general formula LiₓNi_{y}Me_{(1-y)}O₂ (here, Me is at least one kind of metal selected from the group consisting of Al, Mn, Na, Fe, Co, Cr, Cu, Zn, Ca, K, Mg, and Pb).

The positive electrode active material layer can include lithium manganese composite oxide as the positive electrode active material. Examples of the lithium manganese composite oxide include lithium manganese oxide (LiMnO₂) with a zig-zag-layered structure and lithium manganese oxide with a spinel structure (LiMn₂O₄). By using the lithium manganese composite oxide in combination, the positive electrode can be manufactured at lower cost. In particular, it is preferable to use the spinel type lithium manganese oxide (LiMn₂O₄), which is superior in stability of the crystal structure in an overcharged state. If the lithium manganese positive electrode active material is contained, the content is preferably 70 wt% or less, more preferably 30 wt% or less, of the weight of the positive electrode active material. In a case of using the mixed positive electrode, if the positive electrode active material includes an excessive amount of lithium manganese composite oxide, a partial battery is easily formed between the mixed positive electrode and a deposit that is derived from a metal foreign matter and that can enter the battery, and in this case, short-circuiting current easily flows.

The positive electrode active material layer particularly preferably includes as the positive electrode active material, lithium nickel manganese cobalt composite oxide with a layered crystal structure that is expressed by a general formula LiₓNi_{y}Co_{z}Mn_{(1-y-z)}O₂. Here, in the general formula, x is a positive numeral satisfying 1 ≤ x ≤ 1.2, y and z are positive numerals satisfying y + z < 1, and y is a value of 0.5 or less. As manganese is contained more, it becomes difficult to synthesize the composite oxide in a single phase. Therefore, 1 - y - z ≤ 0.4 is desirably satisfied. In addition, as cobalt is contained more, the cost becomes higher and the capacity becomes lower. Therefore, z < y and z < 1 - y - z are desirably satisfied. In order to achieve the high-capacity battery, it is particularly preferable to satisfy y > 1 - y - z and y > z. The lithium nickel composite oxide expressed by this general formula is lithium nickel cobalt manganese composite oxide (hereinafter also referred to as "NCM"). NCM is lithium nickel composite oxide that is suitably used in order to achieve the higher capacity of the battery. For example, the composite oxide expressed by a general formula LiₓNi_{y}Co_{z}Mn_{(1.0-y-z)}O₂ in which x = 1, y = 0.4, and z = 0.3 is referred to as "NCM433", the composite oxide in which x = 1, y = 0.5, and z = 0.2 is referred to as "NCM523", and the composite oxide in which x = 1, y = 1/3, and z = 1/3 is referred to as "NCM111".

Examples of the binder used for the positive electrode active material layer include: fluorine resins such as polyvinylidene fluoride (PVDF), polytetrafluoroethylene (PTFE), and polyvinyl fluoride (PVF); conductive polymers such as polyanilines, polythiophenes, polyacetylenes, and polypyrroles; synthetic rubber such as styrene butadiene rubber (SBR), butadiene rubber (BR), chloroprene rubber (CR), isoprene rubber (IR), and acrylonitrile butadiene rubber (NBR); and polysaccharides such as carboxymethyl cellulose (CMC), xanthan gum, guar gum, and pectin.

Examples of the conductive agent that may be used for the positive electrode active material layer include carbon materials including carbon fiber such as carbon nanofiber, carbon black such as acetylene black or Ketjen black, activated carbon, graphite, mesoporous carbon, fullerenes, and carbon nanotube. In addition, the positive electrode active material layer may contain an electrode additive that is generally used for forming the electrode, such as thickener, dispersant, and stabilizer.

The negative electrode that can be used in every embodiment includes the negative electrode active material layer formed by applying the negative electrode active material mixture. The negative electrode includes the negative electrode active material layer obtained by drying the mixture of the negative electrode active material, the binder, and in some cases, the conductive agent that are applied or rolled on the negative electrode current collector including a metal foil such as a copper foil. The negative electrode active material layer is preferably a porous or microporous layer including pores. In each embodiment, the negative electrode active material includes graphite. In particular, the negative electrode active material layer including graphite is advantageous in improving the output of the battery even when the state of charge (SOC) of the battery is low. Graphite is a hexagonal crystal carbon material having a hexagonal-plate-like crystal structure, and is also referred to as black lead, graphite, or the like. The shape of the graphite is preferably like a particle.

Examples of graphite include natural graphite and artificial graphite. Natural graphite is inexpensive and can be obtained in large quantities, and has a stable structure and excellent durability. Artificial graphite is the graphite produced artificially. Since the artificial graphite has high purity (hardly containing impurities such as allotropes), the artificial graphite has the low electric resistance. Either the natural graphite or the artificial graphite can be used suitably in the present embodiment. Natural graphite including the coating of amorphous carbon or artificial graphite including the coating of amorphous carbon can also be used.

The amorphous carbon may include, in a part, a structure similar to graphite. Here, the amorphous carbon is the carbon material that is amorphous as a whole, with a structure in which microcrystals are randomly networked. Examples of the amorphous carbon include carbon black, coke, activated carbon, carbon fiber, hard carbon, soft carbon, and mesoporous carbon.

These negative electrode active materials may be mixed to be used in some cases. Alternatively, graphite covered with amorphous carbon can be used. When the mixed carbon material including both the graphite particles and the amorphous carbon particles is used as the negative electrode active material, the regeneration performance of the battery is improved. When the natural graphite particles including the coating of the amorphous carbon or the artificial graphite including the coating of the amorphous carbon is used as the carbon material of the negative electrode active material, the decomposition of the electrolyte solution is suppressed; therefore, the durability of the negative electrode is improved.

In the case of using the artificial graphite, the artificial graphite preferably has an interlayer distance d value (d002) of 0.337 nm or more. The structure of the crystal of the artificial graphite is usually thinner than that of the natural graphite. In the case of using the artificial graphite as the negative electrode active material for a lithium ion secondary battery, the artificial graphite satisfies a condition of having the interlayer distance that enables the intercalation of lithium ions. The interlayer distance that enables the intercalation and deintercalation of lithium ions is estimated based on the d value (d002). When the d value is 0.337 nm or more, the intercalation and deintercalation of lithium ions are possible without a problem.

Examples of the binder used for the negative electrode active material layer include: fluorine resins such as polyvinylidene fluoride (PVDF), polytetrafluoroethylene (PTFE), and polyvinyl fluoride (PVF); conductive polymers such as polyanilines, polythiophenes, polyacetylenes, and polypyrroles; synthetic rubber such as styrene butadiene rubber (SBR), butadiene rubber (BR), chloroprene rubber (CR), isoprene rubber (IR), and acrylonitrile butadiene rubber (NBR); and polysaccharides such as carboxymethyl cellulose (CMC), xanthan gum, guar gum, and pectin.

Examples of the conductive agent that may be used for the negative electrode active material layer include carbon materials including carbon fiber such as carbon nanofiber, carbon black such as acetylene black or Ketjen black, activated carbon, mesoporous carbon, fullerenes, and carbon nanotube. In addition, the negative electrode active material layer may contain an electrode additive that is generally used for forming the electrode, such as thickener, dispersant, and stabilizer.

In the positive electrode and the negative electrode that can be employed in every embodiment, the electrode active material layer including the positive electrode active material or the negative electrode active material described above is disposed on the electrode current collector. Each electrode active material layer has a thickness of preferably 10 to 100 µm, more preferably 25 to 50 µm on each surface. If the thickness of the electrode active material layer is too small, it is difficult to form the uniform electrode active material layer, which is disadvantageous. On the other hand, if the thickness of the electrode active material layer is too large, the charging and discharging performance at a high rate may deteriorate, which is disadvantageous. In regard to the thickness of the negative electrode active material layer, it is necessary that the total thickness of the negative electrode active material layer and the separator is less than or equal to 50 micrometers after the lithium ion secondary battery including the lithium ion secondary battery element is charged and discharged once. Therefore, the thickness of the negative electrode active material layer is preferably 10 to 40 µm.

The separator that is used in every embodiment is the uniaxially stretched polyolefin film as described above. The separator may include a heat-resistant microparticle layer in some cases. In these cases, the heat-resistant microparticle layer provided to prevent the overheating of the battery can resist the heat of 150°C or more, and includes inorganic microparticles that are stable in an electrochemical reaction. Examples of such inorganic microparticles include inorganic oxide including silica, alumina (a-alumina, β-alumina, and θ-alumina), iron oxide, titanium oxide, barium titanate, zirconium oxide, or the like, and minerals such as boehmite, zeolite, apatite, kaolin, spinel, mica, and mullite. A ceramic separator including the heat-resistant layer as above can also be used. However, in order to make the total of the thickness of the separator and the thickness of the negative electrode active material layer formed on one surface of the negative electrode be less than or equal to 50 micrometers after the lithium ion secondary battery including the lithium ion secondary battery element is charged and discharged once, it is desirable to use the polyolefin film excluding the heat-resistant microparticle layer as much as possible.

Each of the positive electrode, the separator, and the negative electrode has an independent sheet shape. These members are stacked with the separator interposed between the positive electrode sheet and the negative electrode sheet, so that the lithium ion secondary battery element with the sheet shape is formed. The lithium ion secondary battery element with the sheet shape is impregnated with the electrolyte solution and further sealed with the package; thus, the lithium ion secondary battery can be formed. Sealing means covering with a relatively soft package material so that at least a part of the lithium ion secondary battery element is not exposed to external air. The package of the lithium ion secondary battery according to the embodiment is a housing or a bag-shaped package formed of a relatively soft material. This package has a gas barrier property and can seal the lithium ion secondary battery element. A preferable example of the package is an aluminum laminate sheet including a stack of an aluminum foil and polypropylene or the like. Alternatively, the lithium ion secondary battery may be any other type such as a coil type battery, a laminate type battery, or a wound type battery.

The electrolyte solution is an electrically conductive solution in which an ionic substance is dissolved in a solvent. In the present embodiment, in particular, a nonaqueous electrolyte solution can be used. The lithium ion secondary battery element including the positive electrode, the negative electrode, and the separator that are stacked and include the electrolyte solution constitutes one unit of main component members of the battery. Usually, a plurality of rectangular positive electrodes and a plurality of rectangular negative electrodes are stacked with a plurality of rectangular separators interposed therebetween. This stack is impregnated with the electrolyte solution. The electrolyte solution that is used in every embodiment of the present specification is the nonaqueous electrolyte solution. This nonaqueous electrolyte solution is preferably a mixture containing: a linear carbonate such as dimethyl carbonate (DMC), diethyl carbonate (DEC), ethylmethyl carbonate (EMC), di-n-propyl carbonate, di-t-propyl carbonate, di-n-butyl carbonate, di-isobutyl carbonate, or di-t-butyl carbonate; and a cyclic carbonate such as propylene carbonate (PC) or ethylene carbonate (EC). The electrolyte solution is obtained by dissolving a lithium salt such as lithium hexafluorophosphate (LiPF₆), lithium tetrafluoroborate (LiBF₄), or lithium perchlorate (LiClO₄) in such a carbonate mixture.

The electrolyte solution may contain another cyclic carbonate compound different from the aforementioned cyclic carbonate as the additive. Examples of the cyclic carbonate used as the additive include vinylene carbonate (VC). A cyclic carbonate compound with a halogen may be used as the additive. These cyclic carbonates are also the compounds that form a protective film for the positive electrode and the negative electrode in the process of charging and discharging the battery. In particular, these cyclic carbonates are the compound that can prevent the sulfur-containing compound such as the disulfonic acid compound or the disulfonic acid ester compound from attacking the positive electrode active material containing the lithium nickel composite oxide. Examples of the cyclic carbonate compound with a halogen include fluoroethylene carbonate (FEC), difluoroethylene carbonate, trifluoroethylene carbonate, chloroethylene carbonate, dichloroethylene carbonate, and trichloroethylene carbonate. Fluoroethylene carbonate corresponding to one example of the cyclic carbonate compound with a halogen and an unsaturated bond is particularly preferably used.

The electrolyte solution may further include a disulfonic acid compound as the additive. The disulfonic acid compound is a compound having two sulfo groups in one molecule. The disulfonic acid compound incorporates a disulfonate compound including a sulfo group that forms the salt with the metal ion, or a disulfonic acid ester compound including a sulfo group that forms the ester. One or two of the sulfo groups of the disulfonic acid compound may form the salt with the metal ion. Alternatively, the sulfo group may be in the anion state. Examples of the disulfonic acid compound include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, salts thereof (such as lithium methanedisulfonate and lithium 1,2-ethanedisulfonate), and anions thereof (such as methanedisulfonic acid anion and 1,2-ethanedisulfonic acid anion). Other examples of the disulfonic acid compound include a disulfonic acid ester compound. Linear disulfonic acid ester including alkyl diester, aryl diester, or the like of methanedisulfonic acid, 1,2-ethanedisulfonic acid, 1,3-propanedisulfonic acid, 1,4-butanedisulfonic acid, benzenedisulfonic acid, naphthalenedisulfonic acid, and biphenyldisulfonic acid, and cyclic disulfonic acid ester including methylene methanedisulfonate ester, ethylene methanedisulfonate ester, propylene methanedisulfonate ester, or the like are preferably used. Methylene methanedisulfonate (MMDS) is particularly preferable.

The positive electrode and the negative electrode described above that are stacked with the separator interposed therebetween are sealed in the package together with the electrolyte solution described above. Thus, the laminate type lithium ion secondary battery can be formed. The package may be formed of any material that does not exude the electrolyte solution to the outside. The package may be formed of a laminate film of which outermost layer includes a heat-resistant protective layer including polyester, polyamide, liquid crystal polymer, or the like, and of which innermost layer is a sealant layer including polyethylene, polypropylene, ionomer, acid modified polyethylene such as maleic acid modified polyethylene, acid modified polypropylene such as maleic acid modified polypropylene or a sealant layer including thermosetting resin such as polyethylene terephthalate (PET), polyethylene naphthalate (PEN), polyethylene isophthalate (PEI), a blend of PET and PEN, a blend of PET and PEI, polyamide resin, a blend of polyamide resin and PET, or a blend of polyamide containing a xylene group and PET. The package may be formed by one laminate film or multiple laminate films that are combined and bonded or welded. The metal layer with a gas barrier property may be formed of aluminum, tin, copper, nickel, or stainless steel. The metal layer has a thickness of preferably 30 to 50 µm. It is particularly preferable to use an aluminum laminate including a stack of an aluminum foil and a polymer such as polyethylene or polypropylene.

As a manufacturing method for the lithium ion secondary battery according to the embodiment, a conventional method can be employed without a particular limitation. The lithium ion secondary battery according to the embodiment may be manufactured as will be described below, for example. That is to say, positive electrode and negative electrode tab leads are connected to the stack of the positive electrode, the separator, and the negative electrode by a method of ultrasonic welding or the like. These positive electrode and negative electrode tab leads are disposed at a predetermined position on the package material that is cut out into a rectangle. Then, a part (flange part) of the package material that overlaps with the positive electrode and negative electrode tab leads is heat-sealed. After that, one side of the package material among the sides that do not correspond to a tab lead extraction portion is heat-sealed to form a bag-shaped package. Next, the electrolyte solution is poured into the bag. Finally, the last one side is heat-sealed under reduced pressure. Note that the tab lead of each electrode to be used here is a terminal used to input and output electricity between the positive electrode or the negative electrode in the battery and the outside. As the negative electrode tab lead of the lithium ion secondary battery, nickel or a copper conductor plated with nickel can be used. As the positive electrode tab lead, an aluminum conductor can be used.

Here, a structure example of the lithium ion secondary battery according to the embodiment is described with reference to the drawing. FIG. 1 illustrates one example of a cross-sectional view of the lithium ion secondary battery. A lithium ion secondary battery 10 includes as main components, a negative electrode current collector 11, a negative electrode active material layer 13, a separator 17, a positive electrode current collector 12, and a positive electrode active material layer 15. In FIG. 1, the negative electrode active material layer 13 is provided to each surface of the negative electrode current collector 11, and the positive electrode active material layer 15 is provided to each surface of the positive electrode current collector 12. Alternatively, the active material layer may be formed only on one surface of each current collector. The negative electrode current collector 11, the positive electrode current collector 12, the negative electrode active material layer 13, the positive electrode active material layer 15, and the separator 17 constitute one unit cell (in the drawing, unit cell 19). A plurality of such unit cells (secondary battery element) 19 is stacked with the separator 17 interposed therebetween. Extension parts extended from the negative electrode current collectors 11 are bonded together collectively on a negative electrode tab lead 25. Extension parts extended from the positive electrode current collectors 12 are bonded together collectively on a positive electrode tab lead 27. Note that an aluminum plate is preferably used as the positive electrode tab lead, and a copper plate is preferably used as the negative electrode tab lead. The positive electrode tab lead and the negative electrode tab lead may include a partial coating of a polymer material or other metal (such as nickel, tin, or solder) in some cases. The positive electrode tab lead is welded to the positive electrode. The negative electrode tab lead is welded to the negative electrode. The battery formed by stacking the unit cells in this manner is covered with the package 29 so that the negative electrode tab lead 25 and the positive electrode tab lead 27 that are welded are extracted to the outside. In the package 29, an electrolyte solution 31 is poured. The package 29 has a shape with its periphery heat-sealed.

### EXAMPLES

### <Preparation of positive electrode>

Lithium nickel cobalt manganese composite oxide NCM111, carbon black powder (CB) as the conductive agent, and PVDF (#7200, KUREHA CORPORATION) as the binder resin were mixed so that composite oxide:CB:PVDF = 90:5:5 in a solid content mass ratio. The resulting mixture was added to NMP as the solvent. To this mixture, 0.03 parts by mass of oxalic acid anhydrous (molecular weight: 90) was added as an organic moisture scavenger to 100 parts by mass of a solid content obtained by excluding NMP from the mixture. After that, diffusing and mixing were performed by a planetary method for 30 minutes, so that these materials were diffused uniformly. In this manner, slurry was prepared. The obtained slurry was applied by a doctor's blade method on both surfaces of an aluminum foil with a thickness of 20 µm as the positive electrode current collector. Next, drying was performed at 100°C so that NMP was evaporated. Thus, the positive electrode active material layer was formed on both surfaces of the positive electrode current collector. In addition, roll pressing was performed so that the obtained electrode had a porosity of 35%. After that, the positive electrode was cut out so that the shape including an unapplied part where the positive electrode active material was not applied became rectangular.

### <Preparation of negative electrode >

Graphite powder was used as the negative electrode active material. This carbon material powder, carbon black powder (CB) as the conductive agent, styrene butadiene rubber (SBR) as the binder resin, and carboxymethyl cellulose (CMC) were mixed uniformly so that graphite powder:CB:SBR:CMC = 96:1:2:1. The obtained mixture was added to NMP as the solvent. In this manner, slurry was prepared. The obtained slurry was applied by a doctor's blade method on both surfaces of a copper foil with a thickness of 10 µm as the negative electrode current collector so that the ratio of the negative electrode capacity to the positive electrode capacity (A/C ratio) became 1.2. Next, drying was performed at 100°C so that NMP was evaporated. Thus, the negative electrode active material layer was formed on both surfaces of the negative electrode current collector. In addition, the obtained electrode was roll-pressed so that the negative electrode active material layer on both surfaces had a porosity of 40% and a thickness of 19 µm, 26 µm, 27 µm, or 29 µm (these values are listed in the columns "negative electrode active material layer thickness *before charging and discharging" in Tables 1 to 3). After that, the negative electrode was cut out so that the shape including an unapplied part where the negative electrode active material was not applied became rectangular.

### <Separator>

The uniaxially stretched polypropylene separator with a porosity of 60% and an air permeability of 50 seconds/100 milliliters, 100 seconds/100 milliliters, or 130 seconds/100 milliliters was prepared. Note that the air permeability of the separator was measured in accordance with Japanese Industrial Standards JISP8117:2009 using a Gurley permeability tester. Each separator had the thickness shown in Table 1.

### <Electrolyte solution>

Ethylene carbonate (EC) and diethyl carbonate (DEC) were mixed at a volume ratio of EC:DEC = 30:70. Thus, the nonaqueous solvent in which 1 wt% of vinylene carbonate (VC) was mixed was prepared. To this mixed nonaqueous solvent, lithium hexafluorophosphate (LiPF₆) as the electrolyte salt was dissolved so that the concentration thereof became 1 mol/L. This solution was used as the electrolyte solution.

### <Package>

As the laminate film for the package, a stack of films including nylon with a thickness of 25 µm, soft aluminum with a thickness of 40 µm, and polypropylene with a thickness of 40 µm was used.

### <Preparation of lithium ion secondary battery>

The positive electrode and the negative electrode that are prepared as above were disposed so as to overlap with each other with the separator interposed therebetween; thus, the battery element was obtained. Here, when these electrodes were stacked, the direction of the positive electrode and the negative electrode was aligned so that the unapplied part of the positive electrode active material and the unapplied part of the negative electrode active material were disposed to face each other. By this structure, the electrode tab leads can be led out from the two sides that face each other. The aluminum plate to serve as the positive electrode tab lead and the positive electrode active material layer unapplied part were welded collectively with ultrasonic waves. Similarly, the copper plate plated with nickel that was used as the negative electrode tab lead, and the negative electrode active material layer unapplied part were welded collectively with ultrasonic waves. Then, an inner end (one end part) of the negative electrode terminal was bonded to an extension part of the negative electrode current collector of the negative electrode plate. On the positive electrode that is disposed at the outermost side of the electrode stack, the copper piece as the metal foreign substance was fixed. The laminate film cut out into a predetermined size was formed by deep drawing into a cup shape with a size that can house the electrode stack. After the deep drawing, a flange part around the cup part was trimmed so that a side with a width of 15 mm was left. The electrode stack was housed in the cup part of the laminate film. The electrode stack was disposed so that the electrode tab leads were placed at two positions on the flange part of the trimmed laminate film. Here, the sealant, which has been fused on the electrode tab lead, was exuded to the inside and outside of the battery over the flange part by 1 mm each. By heat-pressing the flange part of the side where the electrode tab lead was led out, the laminate films were heat-sealed together by a width of 9.5 to 10 mm. In this case, the sealant that has been fused to each electrode tab lead, and the laminate film were also fused. Thus, the electrode tab leads were also strictly sealed. Of the two sides adjacent to the sealing side of the electrode tab lead, one side was heat-sealed. The electrolyte solution was poured from the unsealed side so that the electrode stack was impregnated with the electrolyte solution sufficiently. After the electrolyte solution was poured, the package was vacuum degassed. After that, the last one side was sealed using a vacuum sealing machine. Thus, the stacked lithium ion battery was completed. After this stacked lithium ion battery was charged initially, aging at 45°C was performed for several days. Thus, the stacked lithium ion battery with an element capacity of 37 mAh was obtained.

### <Initial charging and discharging of lithium ion secondary battery>

As the initial charging and discharging of the lithium ion battery prepared as above, constant-current constant-voltage charging at 0.1 C to 4.1 V (end condition: 12 hours) was performed, and then constant-current discharging at 0.1 C to 2.5 V was performed. The thickness of the separator and the negative electrode of the lithium ion battery that was disassembled after this initial charging and discharging was measured using a micro-gauge. From this value, the thickness of the separator and the thickness of the negative electrode current collector were subtracted, and the obtained value was divided by 2. By the obtained value, the thickness of the negative electrode active material layer that was applied on one surface was obtained (in Tables 1 to 3, shown in the column of "negative electrode active material layer thickness ^{∗}after charging and discharging"). In Tables 1 to 3, the value shown in the column "negative electrode active material layer thickness + separator thickness" is the value obtained by adding up the value in "negative electrode active material layer thickness ^{∗}after charging and discharging" and the value in "separator thickness" above.

### <Evaluation on lithium ion secondary battery element>

The prepared lithium ion battery was charged up to 3.7 V. Discharging with a current quantity of 44 mA/cm² was performed. After 10 seconds, the battery voltage was measured. The battery voltage of the battery having a battery voltage of 2.5 V or more after 10 seconds was listed. On the other hand, the battery of which battery voltage was not kept at 2.5 V after 10 seconds (battery of which battery voltage has decreased to 2.5 V or less in 10 seconds) was shown "unacceptable".

**[Table 1] Evaluation on lithium ion secondary battery element (separator air permeability: 50 seconds/100 mL)**

| | Negative electrode active material layer thickness (µm) *Before charging and discharging | Negative electrode active material layer thickness (µm) *After charging and discharging | Separator thickness (µm) | Negative electrode active material layer thickness + separator thickness (µm) *After charging and discharging | Evaluation on Voltage after 10 seconds |
|---|---|---|---|---|---|
| Example 1 | 19 | 21 | 16 | 37 | 2.64V |
| Example 2 | 19 | 21 | 20 | 41 | 2.61V |
| Example 3 | 19 | 21 | 25 | 46 | 2.61V |
| Example 4 | 26 | 29 | 16 | 45 | 2.60V |
| Example 5 | 27 | 30 | 20 | 50 | 2.53V |
| Example 6 | 27 | 30 | 16 | 46 | 2.61V |
| Comparative example 1 | 26 | 29 | 25 | 54 | Unacceptable |
| Comparative example 2 | 29 | 32 | 20 | 52 | Unacceptable |
| Comparative example 3 | 29 | 32 | 25 | 57 | Unacceptable |

**[Table 2] Evaluation on lithium ion secondary battery element (separator air permeability: 100 seconds/100 mL)**

| | Negative electrode active material layer thickness (µm) *Before charging and discharging | Negative electrode active material layer thickness (µm) *After charging and discharging | Separator thickness (µm) | Negative electrode active material layer thickness + separator thickness (µm) *After charging and discharging | Evaluation on Voltage after 10 seconds |
|---|---|---|---|---|---|
| Example 1 | 19 | 21 | 16 | 37 | 2.60V |
| Example 2 | 19 | 21 | 20 | 41 | 2.59V |
| Example 3 | 19 | 21 | 25 | 46 | 2.61V |
| Example 4 | 26 | 29 | 16 | 45 | 2.57V |
| Example 5 | 27 | 30 | 20 | 50 | 2.51V |
| Example 6 | 27 | 30 | 16 | 46 | 2.60V |
| Comparative example 1 | 26 | 29 | 25 | 54 | Unacceptable |
| Comparative example 2 | 29 | 32 | 20 | 52 | Unacceptable |
| Comparative example 3 | 29 | 32 | 25 | 57 | Unacceptable |

**[Table 3] Evaluation on lithium ion secondary battery element (separator air permeability: 130 seconds/100 mL)**

| | Negative electrode active material layer thickness (µm) *Before charging and discharging | Negative electrode active material layer thickness (µm) *After charging and discharging | Separator thickness (µm) | Negative electrode active material layer thickness + separator thickness (µm) *After charging and discharging | Evaluation on Voltage after 10 seconds |
|---|---|---|---|---|---|
| Comparative example 1 | 19 | 21 | 16 | 37 | Unacceptable |
| Comparative example 2 | 19 | 21 | 20 | 41 | Unacceptable |
| Comparative example 3 | 19 | 21 | 25 | 46 | Unacceptable |
| Comparative example 4 | 26 | 29 | 16 | 45 | Unacceptable |
| Comparative example 5 | 27 | 30 | 20 | 50 | Unacceptable |
| Comparative example 6 | 27 | 30 | 16 | 46 | Unacceptable |
| Comparative example 7 | 26 | 29 | 25 | 54 | Unacceptable |
| Comparative example 8 | 29 | 32 | 20 | 52 | Unacceptable |
| Comparative example 9 | 29 | 32 | 25 | 57 | Unacceptable |

The batteries according to Examples in which the total of the thickness of the separator and the thickness of the negative electrode active material layer formed on one surface of the negative electrode is less than or equal to 50 micrometers after the lithium ion secondary battery including the separator with an air permeability of less than or equal to 100 seconds/100 milliliters was charged and discharged once achieved a predetermined battery voltage within a predetermined time. On the other hand, the batteries according to Comparative examples in which any of the above conditions was not satisfied failed to achieve the sufficient output within the predetermined time.

Examples of the present invention have been described so far. However, these Examples merely show some examples of the embodiment of the present invention. Limiting the technical range of the present invention to the particular embodiment or the specific structure is not intended in these Examples.

## Claims

1. A lithium ion secondary battery element comprising a positive electrode, a separator (17), and a negative electrode that are stacked, wherein:
the positive electrode includes a positive electrode active material layer (15) formed by applying a positive electrode active material mixture;
the negative electrode includes a negative electrode active material layer (13) formed by applying a negative electrode active material mixture;
the separator (17) is a uniaxially stretched film of polyolefin and has an air permeability of less than or equal to 100 seconds/100 milliliters, the air permeability being measured in accordance with Japanese Industrial Standards JISP8117:2009 using a Gurley permeability tester; and
after a lithium ion secondary battery (10) including the lithium ion secondary battery element is charged and discharged once, a total of a thickness of the separator (17) and a thickness of the negative electrode active material layer (13) formed on one surface of the negative electrode is less than or equal to 50 micrometers.

2. The lithium ion secondary battery element according to claim 1, wherein the uniaxially stretched film of the polyolefin is crosslinked.

3. The lithium ion secondary battery element according to claim 1 or 2, wherein each of the positive electrode, the separator (17), and the negative electrode has an independent sheet shape.

4. A lithium ion secondary battery (10) comprising, in a package (29), a power generating element including the lithium ion secondary battery element according to any one of claims 1 to 3, and an electrolyte solution (31).

## Patentansprüche

1. Lithium-Ionen-Sekundärbatterieelement mit einer positiven Elektrode, einem Separator (17) und einer negativen Elektrode, die gestapelt sind, wobei:
die positive Elektrode eine aktive Materialschicht (15) für die positive Elektrode enthält, die durch Aufbringen einer aktiven Materialmischung für die positive Elektrode gebildet wird;
die negative Elektrode eine aktive Materialschicht (13) für die negative Elektrode enthält, die durch Aufbringen einer aktiven Materialmischung für die negative Elektrode gebildet wird;
der Separator (17) eine uniaxial gestreckte Folie aus Polyolefin ist und eine Luftdurchlässigkeit von weniger als oder gleich 100 Sekunden/100 Milliliter aufweist, wobei die Luftdurchlässigkeit gemäß dem japanischen Industriestandard JISP8117:2009 unter Verwendung eines Gurley-Permeabilitätstesters gemessen wird; und
nachdem eine Lithium-Ionen-Sekundärbatterie (10), die das Lithium-Ionen-Sekundärbatterieelement enthält, einmal geladen und entladen wurde, eine Gesamtdicke des Separators (17) und eine Dicke der aktiven Materialschicht (13) der negativen Elektrode, die auf einer Oberfläche der negativen Elektrode gebildet ist, weniger als oder gleich 50 Mikrometer beträgt.

2. Lithium-Ionen-Sekundärbatterieelement nach Anspruch 1, wobei die uniaxial gestreckte Folie aus dem Polyolefin vernetzt ist.

3. Lithium-Ionen-Sekundärbatterieelement nach Anspruch 1 oder 2, wobei die positive Elektrode, der Separator (17) und die negative Elektrode eine unabhängige Bahnform aufweisen.

4. Lithium-Ionen-Sekundärbatterie (10), die in einem Gehäuse (29) ein Stromerzeugungselement, das das Lithium-Ionen-Sekundärbatterieelement nach einem der Ansprüche 1 bis 3 enthält, und eine Elektrolytlösung (31) umfasst.

## Revendications

1. Élément de batterie rechargeable au lithium-ion comprenant une électrode positive, un séparateur (17) et une électrode négative qui sont empilés, dans lequel :
l'électrode positive inclut une couche de matériau actif d'électrode positive (15) formée par application d'un mélange de matériau actif d'électrode positive ;
l'électrode négative comprend une couche de matériau actif d'électrode négative (13) formée par application d'un mélange de matériau actif d'électrode négative ;
le séparateur (17) est un film de polyoléfine étiré uniaxialement et qui présente une perméabilité à l'air inférieure ou égale à 100 secondes/100 millilitres, la perméabilité à l'air étant mesurée conformément aux normes industrielles japonaises JISP8117:2009 en utilisant un testeur de perméabilité Gurley ; et
après qu'une batterie rechargeable au lithium-ion (10) incluant l'élément de batterie rechargeable au lithium-ion a été chargée et déchargée une fois, un total d'une épaisseur du séparateur (17) et d'une épaisseur de la couche de matériau actif d'électrode négative (13) formée sur une surface de l'électrode négative est inférieur ou égal à 50 micromètres.

2. Élément de batterie rechargeable au lithium-ion selon la revendication 1, dans lequel le film étiré uniaxialement de la polyoléfine est réticulé.

3. Élément de batterie rechargeable au lithium-ion selon la revendication 1 ou 2, dans lequel chacun de l'électrode positive, du séparateur (17), et de l'électrode négative a une forme de feuille indépendante.

4. Batterie rechargeable au lithium-ion (10) comprenant, dans un boîtier (29), un élément générateur d'énergie incluant l'élément de batterie rechargeable au lithium-ion selon l'une quelconque des revendications 1 à 3, et une solution d'électrolyte (31).
